# FASCICULE DE BREVET EUROPEEN

(11) **EP 4 402 058 B1**
(45) Date de publication et mention de la délivrance du brevet: **27.08.2025**
(21) Numéro de dépôt: 22783541.0
(22) Date de dépôt: 12.09.2022
(51) Int. Cl.: B64D 29/08, B64D 29/06

(54) **NACELLE POUR ENSEMBLE PROPULSIF D'AÉRONEF COMPRENANT UN ESPACE D'ACCÈS OBTURÉ PAR UN CAPOTAGE À SERRAGE TANGENTIEL**
GONDEL FÜR EIN FLUGZEUGTRIEBWERK MIT EINEM ZUGANG, DER DURCH EINE TANGENTIAL VERBUNDENE VERKLEIDUNG VERSCHLOSSEN IST
NACELLE FOR AN AIRCRAFT PROPULSION UNIT COMPRISING AN ACCESS SPACE CLOSED BY A TANGENTIALLY CLAMPED COWLING

(30) Priorité: 13.09.2021 FR 2109579
(43) Date de publication de la demande: 24.07.2024
(73) Titulaire: Safran Nacelles, 76700 Gonfreville-l'Orcher (FR)
(72) Inventeur: CARUEL, Pierre Charles, 75550 MOISSY-CRAMAYEL (FR)
(74) Mandataire: Brevalex
(86) Numéro de dépôt international: PCT/FR2022/051712
(87) Numéro de publication internationale: WO 2023/037085

(56) Documents cités:
- EP-A1- 2 750 972
- FR-A1- 3 004 700
- FR-A1- 3 031 341
- US-A1- 2017 369 189
- US-A1- 2019 300 191

## Description

### Domaine technique

La présente invention se rapporte au domaine des nacelles d'ensembles propulsifs pour aéronefs, et concerne plus particulièrement une nacelle du type dont la section intermédiaire comporte des capots fixes démontables, c'est-à-dire des capots rigidement fixés à au moins une autre partie de la nacelle au moyen d'organes de fixation qu'il est nécessaire de démonter pour permettre un accès à l'intérieur de l'ensemble propulsif.

### État de la technique antérieure

Une nacelle d'ensemble propulsif pour aéronef présente généralement une structure tubulaire comprenant, de l'amont vers l'aval, une section amont formée d'un capotage d'entrée d'air destiné à séparer, en fonctionnement, le flux d'air entrant dans le turboréacteur et le flux d'air contournant l'ensemble propulsif, une section intermédiaire destinée à entourer une soufflante de turboréacteur, et une section aval comportant des moyens d'inversion de poussée et destinée à entourer le générateur de gaz du turboréacteur. Par capotage, il faut comprendre un unique capot ou un assemblage de plusieurs capots.

Dans certaines nacelles, les capots de la section intermédiaire, couramment dénommés capots de soufflante, sont montés articulés sur une structure fixe de la nacelle ou du mat de l'ensemble propulsif et sont ainsi capables de pivoter d'une position de fermeture vers une position d'ouverture, selon un mouvement dit en « papillon », pour permettre un accès à l'intérieur de l'ensemble propulsif, par exemple pour des opérations de maintenance. Ces nacelles présentent en général une masse importante, un coût important, et leur ouverture implique des charges élevées.

Dans d'autres nacelles, notamment lorsqu'il est souhaité d'éviter les inconvénients précités, les capots de la section intermédiaire sont rigidement fixés à au moins une autre partie de la nacelle, notamment le capotage d'entrée d'air, au moyen d'organes de fixation qu'il est nécessaire de démonter pour permettre un accès à l'intérieur de l'ensemble propulsif. Les capots peuvent dans ce cas être qualifiés de « fixes » et « démontables ». La présente invention concerne les nacelles comportant de tels capots.

Le document FR3004700 divulgue un exemple de nacelle à lèvre d'entrée d'air allongée et capots fixes démontables.

Dans une telle nacelle, le capotage d'entrée d'air présente une extrémité arrière interne destinée à être rigidement fixée de manière démontable sur une bride annulaire d'un carter de soufflante du turboréacteur, et le capotage d'entrée d'air présente une extrémité arrière externe sur laquelle sont fixées les extrémités avant des capots fixes démontables, au moyen d'organes de fixation traversants tels que des vis, des vis quart de tour, ou des vis à nombre de filets réduit, répartis autour de l'axe de la nacelle, et qui sont en général nombreux pour assurer un accostage précis entre les différentes parties et minimiser les désaffleurements.

Lorsqu'il est nécessaire de démonter le capotage d'entrée d'air, le fait de devoir accéder à la bride annulaire du carter de soufflante oblige à démonter l'ensemble des organes de fixation traversants des capots pour déposer ces derniers. Une telle opération se révèle ainsi longue et coûteuse à mettre en œvre.

Le document EP 2750 972 A1 divulgue une nacelle pour ensemble propulsif d'aéronef de l'état de la technique, ladite nacelle ayant un capotage d'entrée d'air présentant une cloison destinée à être rigidement fixée de manière démontable à un carter de soufflante de turboréacteur.

La nacelle comprend en outre une section intermédiaire avec des capots de type fixes et démontable aussi que une section arrière.

Une rangée annulaire d'éléments longitudinales espacées les uns des autres relient rigidement le capotage d'entrée d'air et le carter de soufflante.

### Exposé de l'invention

L'invention a notamment pour but d'apporter une solution simple, économique et efficace au problème ci-dessus.

Elle propose à cet effet une nacelle pour ensemble propulsif d'aéronef, comprenant, de l'avant vers l'arrière :
- un capotage d'entrée d'air présentant une extrémité arrière interne destinée à être rigidement fixée de manière démontable à un carter de soufflante de turboréacteur, et une extrémité arrière externe ;
- une section intermédiaire comportant des capots de type fixes et démontables, répartis autour d'un axe de la nacelle ; et
- une section arrière.

Selon l'invention, les capots présentent des extrémités avant agencées chacune axialement en regard et à distance de l'extrémité arrière externe du capotage d'entrée d'air de manière à définir un espace d'accès entre les extrémités avant des capots et l'extrémité arrière externe du capotage d'entrée d'air, et la section intermédiaire comporte en outre :
- une rangée annulaire de pièces de liaison espacées les unes des autres et reliant rigidement l'extrémité arrière externe du capotage d'entrée d'air aux extrémités avant des capots de manière à transmettre des efforts longitudinaux entre le capotage d'entrée d'air et les capots ; et
- un capotage intermédiaire s'étendant entre le capotage d'entrée d'air et les capots, autour de la rangée annulaire de pièces de liaison, de manière à obturer l'espace d'accès et former une continuité aérodynamique avec le capotage d'entrée d'air et les capots, ledit capotage intermédiaire étant formé d'au moins une bande dont le maintien en position est assuré par un serrage tangentiel d'extrémités circonférentielles de l'au moins une bande.

Lorsqu'il est nécessaire d'accéder à un volume interne du capotage d'entrée d'air, il suffit de relâcher le serrage tangentiel des extrémités de la ou les bandes constituant le capotage intermédiaire, ce qui est considérablement plus rapide et simple que le démontage de multiples rangées annulaires d'organes de fixation des capots, comme cela était nécessaire avec les nacelles de type connu.

Dès que le capotage intermédiaire est retiré, l'espace d'accès se trouve découvert et permet à un opérateur d'accéder au volume interne du capotage d'entrée d'air, par exemple pour intervenir sur les moyens de fixation qui relient l'extrémité arrière interne du capotage d'entrée d'air au carter de soufflante.

Le capotage d'entrée d'air peut ainsi être déposé, ou à l'inverse, monté sur la turbomachine, et, plus généralement, l'accès au volume interne est rendu possible, sans avoir à déposer au préalable les capots de la section intermédiaire.

L'invention tire parti du fait que la fixation de la ou les bandes constituant le capotage n'est pas critique pour la sécurité d'un avion en vol, du fait de l'étendue limitée du capotage, et donc aussi de la masse limitée de ce dernier, de sorte qu'un détachement d'une telle bande en vol ne risque pas d'occasionner de dégâts critiques en cas de choc avec la cellule de l'aéronef.

À cet effet, le capotage présente de préférence une étendue axiale inférieure à 30 centimètres, et encore préférentiellement comprise entre 15 centimètres et 25 centimètres, et par exemple de 20 centimètres.

Dans des modes de réalisation préférés de l'invention, le capotage d'entrée d'air comporte un premier rebord décalé radialement vers l'intérieur et sur lequel repose une extrémité avant du capotage intermédiaire.

Dans des modes de réalisation préférés de l'invention, les capots comportent chacun un deuxième rebord décalé radialement vers l'intérieur et sur lequel repose une extrémité arrière du capotage intermédiaire.

Dans des modes de réalisation préférés de l'invention, l'au moins une bande comprend deux bandes agencées de part et d'autre d'un plan vertical médian de la nacelle.

Dans des modes de réalisation préférés de l'invention, le serrage tangentiel de l'au moins une bande est réalisé au moyen d'au moins un organe de fixation démontable sollicité élastiquement.

Dans des modes de réalisation préférés de l'invention, le capotage d'entrée d'air comporte une structure de serrage sur laquelle est réalisé le serrage tangentiel de l'au moins une bande.

Dans des modes de réalisation préférés de l'invention, les pièces de liaison sont reliées au moyen d'organes de fixation traversants démontables, d'une part, à l'extrémité arrière externe du capotage d'entrée d'air, et, d'autre part, aux extrémités avant des capots.

Dans des modes de réalisation préférés de l'invention, la section arrière comporte un inverseur de poussée comprenant une grille déflectrice déplaçable entre une position avancée de poussée directe et une position reculée d'inversion de poussée, et dans laquelle les capots recouvrent au moins une portion avant de la grille déflectrice dans la position avancée de poussée directe.

L'invention concerne également un ensemble propulsif pour aéronef, comprenant :
- un turboréacteur comprenant une soufflante et un carter de soufflante entourant la soufflante ; et
- une nacelle du type décrit ci-dessus, entourant le turboréacteur, et dont l'extrémité arrière interne du capotage d'entrée d'air est rigidement fixée de manière démontable au carter de soufflante du turboréacteur.

Dans des modes de réalisation préférés de l'invention, le carter de soufflante comporte une structure de serrage sur laquelle est réalisé le serrage tangentiel de l'au moins une bande.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- La figure 1 est une vue schématique partielle en coupe axiale d'un ensemble propulsif pour aéronef ;
- La figure 2 est une demi-vue schématique partielle en coupe axiale à plus grande échelle d'un ensemble propulsif pour aéronef de type connu ;
- La figure 3 est vue schématique en perspective de l'ensemble propulsif de la figure 2 dont des capots de type fixes et démontables ont été démontés ;
- La figure 4 est une vue semblable à la figure 2, illustrant un ensemble propulsif selon un mode de réalisation préféré de l'invention ;
- La figure 5 est une vue à plus grande échelle d'une partie de la figure 4, illustrant un capotage d'entrée d'air et une section intermédiaire d'une nacelle, et un carter de soufflante, de l'ensemble propulsif;
- La figure 6 est une vue à plus grande échelle d'une partie de la figure 5, illustrant le capotage d'entrée d'air et la section intermédiaire de la nacelle en coupe dans le plan VI-VI de la figure 9 ;
- La figure 7 est une vue semblable à la figure 6, en coupe dans le plan VII-VII de la figure 9 ;
- La figure 8 est une vue schématique partielle en perspective de l'ensemble propulsif de la figure 4 ;
- La figure 9 est une vue semblable à la figure 8, sur laquelle une bande formant partiellement un capotage intermédiaire de la section intermédiaire de la nacelle a été démontée, laissant apparaître un espace d'accès entre des extrémités avant des capots et une extrémité arrière externe du capotage d'entrée d'air ;
- La figure 10 est une vue semblable à la figure 9, selon un autre angle de vue ;
- La figure 11 est une vue schématique partielle de dessus de l'ensemble propulsif de la figure 4, sur laquelle est visible ledit espace d'accès ;
- La figure 12 est une vue semblable à la figure 9, montrant en outre ladite bande ;
- La figure 13 est une vue schématique partielle de l'ensemble propulsif de la figure 4 en coupe transversale selon le plan XIII-XIII de la figure 12, illustrant des moyens de serrage tangentiel dudit capotage intermédiaire ;
- La figure 14 est une vue semblable à la figure 13, illustrant une variante de réalisation desdits moyens de serrage tangentiel.

Dans l'ensemble de ces figures, des références identiques peuvent désigner des éléments identiques ou analogues.

### Exposé détaillé de modes de réalisation préférés

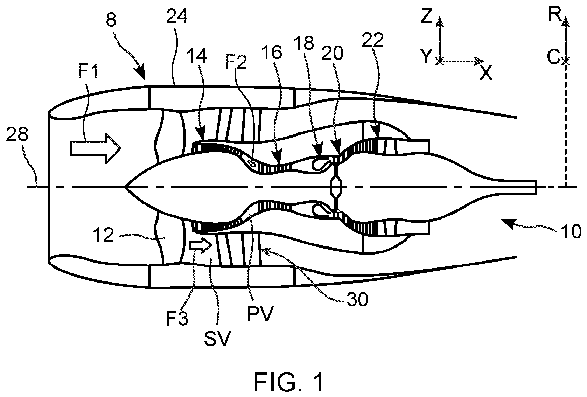

La figure 1 illustre un ensemble propulsif 8 pour aéronef, comprenant un turboréacteur 10 par exemple du type à double flux et à double corps, ce dernier comportant de manière générale une soufflante 12 destinée à l'aspiration d'un flux d'air F1 se divisant en aval de la soufflante en un flux primaire F2 circulant dans un canal d'écoulement de flux primaire, ci-après dénommé veine primaire PV, au sein d'un cœur du turboréacteur, et un flux secondaire F3 contournant ce cœur dans un canal d'écoulement de flux secondaire, ci-après dénommé veine secondaire SV.

Le cœur du turboréacteur comporte, de manière générale, un compresseur basse pression 14, un compresseur haute pression 16, une chambre de combustion 18, une turbine haute pression 20 et une turbine basse pression 22.

Les rotors respectifs du compresseur haute pression et de la turbine haute pression sont reliés par un arbre dit « arbre haute pression », tandis que les rotors respectifs du compresseur basse pression et de la turbine basse pression sont reliés par un arbre dit « arbre basse pression », d'une manière bien connue.

Le turboréacteur est caréné par une nacelle 24 entourant la veine secondaire SV. Par ailleurs, les rotors du turboréacteur sont montés rotatifs autour d'un axe du turboréacteur, qui coïncide avec l'axe de la nacelle 24 au sein de l'ensemble propulsif 8. Ces deux axes sont indifféremment désignés par la référence 28 dans l'ensemble de cette description.

Dans l'ensemble de cette description, la direction axiale X est la direction de l'axe 28, la direction verticale Z est une direction orthogonale à la direction axiale X et orientée selon la verticale lorsque l'ensemble propulsif 8 équipe un aéronef stationné au sol, et la direction transversale Y est orthogonale aux deux directions précédentes. Par ailleurs, la direction radiale R et la direction circonférentielle C ou direction azimutale sont définies par référence à l'axe 28, tandis que les directions « amont » et « avant » d'une part, et « aval » et « arrière » d'autre part, sont définies par référence à l'écoulement général des gaz dans le turboréacteur.

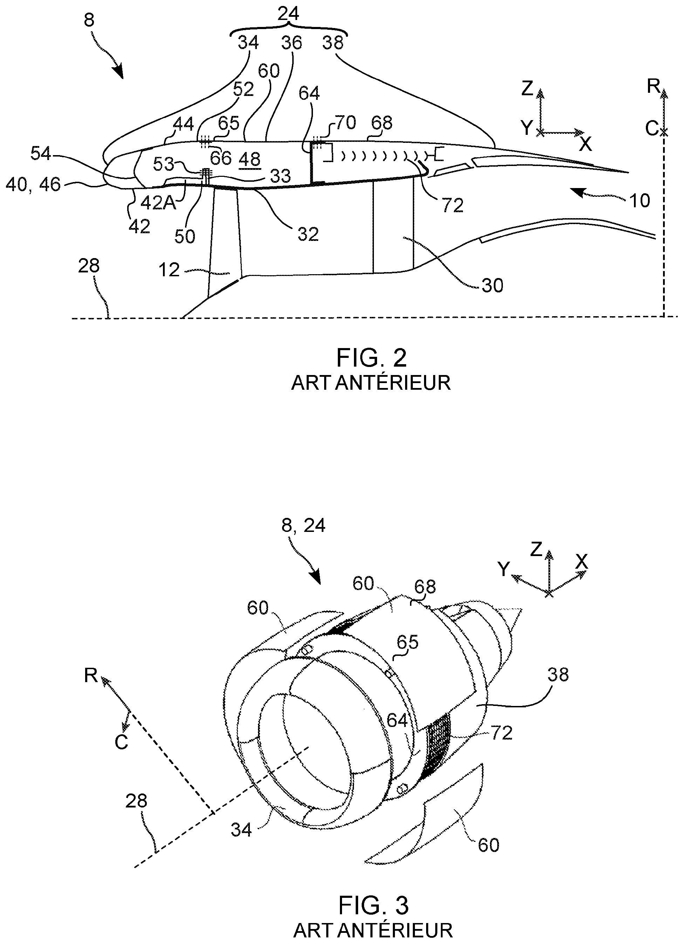

Le turboréacteur comprend un carter inter-compresseur 30 agencé axialement entre le compresseur basse pression 14 et le compresseur haute pression 16, et représenté isolé sur la figure 2. Dans le contexte non limitatif d'un turboréacteur à double corps, un tel carter inter-compresseur 30 est parfois dénommé carter intermédiaire.

En référence à la figure 2, qui illustre un tel ensemble propulsif selon une configuration connue, le carter inter-compresseur 30 porte un carter de soufflante 32 agencé en amont de celui-ci, autour de la soufflante 12. Le carter de soufflante 32 comporte une bride annulaire 33 à son extrémité amont.

Par ailleurs, la nacelle 24 comprend, de l'avant vers l'arrière, un capotage d'entrée d'air 34, une section intermédiaire 36, et une section arrière 38.

Le capotage d'entrée d'air 34 comporte principalement une paroi externe 40 à section globalement en forme de C, à convexité orientée vers l'amont, destinée à séparer, en fonctionnement, le flux d'air entrant dans le turboréacteur 10 et le flux d'air contournant l'ensemble propulsif 8. La paroi externe 40 présente ainsi deux portions d'extrémités opposées définissant respectivement une virole interne 42 et une virole externe 44, reliées l'une à l'autre par une portion intermédiaire 46 de forme annulaire à section convexe, formant une lèvre d'entrée d'air. La paroi externe 40 délimite ainsi un volume interne 48 du capotage d'entrée d'air 34, qui constitue la portion avant d'un volume interne de la nacelle 24. La virole interne 42 présente par exemple une portion d'extrémité arrière formant un panneau acoustique 42A.

La virole interne 42 définit, à son extrémité arrière, une extrémité arrière interne 50 du capotage d'entrée d'air 34, tandis que la virole externe 44 définit, à son extrémité arrière, une extrémité arrière externe 52 du capotage d'entrée d'air 34.

L'extrémité arrière interne 50 est rigidement fixée de manière démontable à la bride annulaire 33 du carter de soufflante 32, par exemple au moyen d'une ou plusieurs rangées annulaires d'organes de fixation traversants démontables 53 tels que des boulons.

À titre illustratif, le capotage d'entrée d'air 34 comporte en outre une cloison avant 54 de forme annulaire reliant une région avant de la virole interne 42 à une région avant de la virole externe 44.

Dans l'exemple illustré, la portion intermédiaire 46 ou lèvre d'entrée d'air et la virole externe 44 sont réalisées d'un seul tenant. Autrement dit, la lèvre d'entrée d'air est du type allongé, c'est-à-dire s'étendant jusqu'à l'extrémité arrière externe 52 du capotage d'entrée d'air 34.

En variante, la portion intermédiaire 46 ou lèvre d'entrée d'air et la virole externe 44 peuvent être constituées de capots distincts assemblés les uns aux autres. Dans ce cas, le capotage d'entrée d'air 34 comporte en outre une cloison arrière de forme annulaire reliant une région arrière de la virole interne 42 à une région arrière de la virole externe 44.

La section intermédiaire 36 de la nacelle comporte des capots 60 de type fixes et démontables, répartis autour de l'axe 28 de la nacelle, et délimitant extérieurement une portion intermédiaire 62 du volume interne de la nacelle 24, autour du carter de soufflante 32, en aval du volume interne 48 du capotage d'entrée d'air 34.

La section intermédiaire 36 comporte en outre une cloison principale 64 de forme annulaire, s'étendant au sein de la portion intermédiaire 62 du volume interne de la nacelle 24, et reliant le carter de soufflante 32 aux capots 60.

Les capots 60 ont leurs extrémités avant 65 respectives rigidement reliées à l'extrémité arrière externe 52 du capotage d'entrée d'air 34. Dans un but de continuité aérodynamique, les extrémités avant 65 des capots et l'extrémité arrière externe 52 du capotage d'entrée d'air 34 sont par exemple fixées à une virole rapportée sur la surface intérieure de ces éléments, typiquement au moyen de rangées annulaires d'organes de fixation traversants démontables 66 tels que des vis. Les capots 60 ont des portions arrière 68 respectives fixées sur la cloison principale 64, typiquement au moyen de rangées annulaires d'organes de fixation traversants démontables 70 tels que des vis.

La section arrière 38 de la nacelle comporte par exemple un inverseur de poussée du type comprenant une grille déflectrice déplaçable d'avant en arrière pour passer d'une configuration rétractée pour un fonctionnement de l'ensemble propulsif en mode de poussée directe, à une configuration déployée pour un fonctionnement de l'ensemble propulsif en mode d'inversion de poussée. La grille 72 d'un tel inverseur de poussée est par exemple entourée, totalement ou partiellement, par les portions arrière 68 des capots 60 dans la configuration rétractée, visible sur la figure 2.

Lorsqu'il est nécessaire de démonter le capotage d'entrée d'air 34, le fait de devoir accéder à la bride annulaire 33 du carter de soufflante 32 oblige à démonter l'ensemble des organes de fixation 66 et 70 des capots 60 pour déposer ces derniers et permettre ainsi l'accès au volume interne de la nacelle, comme illustré sur la figure 3. Une telle opération se révèle longue et coûteuse à mettre en œuvre.

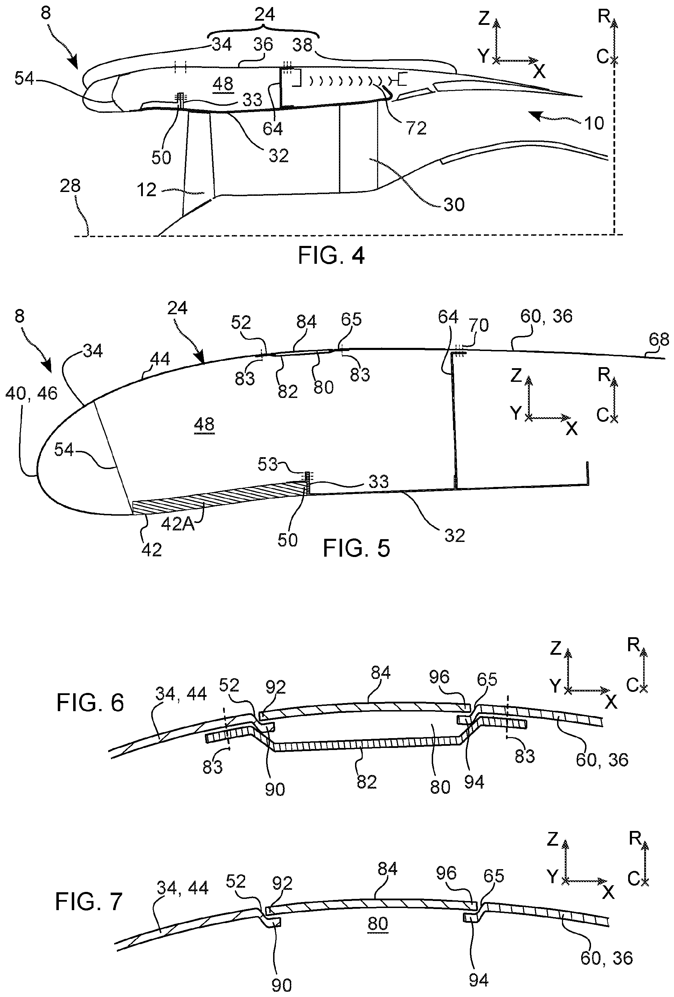

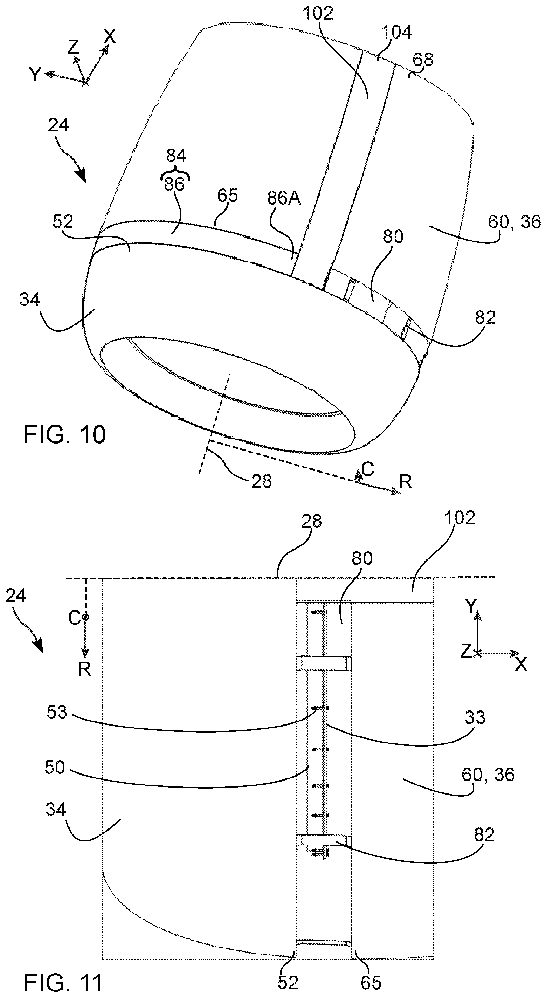

Pour remédier à ce problème, la nacelle 24 qui équipe l'ensemble propulsif illustré sur les figures 4 à 14 est telle que les capots 60 présentent des extrémités avant 65 agencées chacune axialement en regard et à distance de l'extrémité arrière externe 52 du capotage d'entrée d'air 34 de manière à définir un espace d'accès 80 entre les extrémités avant 65 des capots et l'extrémité arrière externe 52 du capotage d'entrée d'air (figures 6 à 12). Par « espace d'accès », il faut comprendre un espace présentant une étendue axiale suffisante pour permettre le passage des bras d'un opérateur afin que ce dernier puisse intervenir sur les organes de fixation traversants démontables 53 qui relient l'extrémité arrière interne 50 du capotage d'entrée d'air 34 à la bride annulaire 33 du carter de soufflante 32. Il est considéré qu'une étendue axiale de 20 centimètres est satisfaisante à cet effet, bien qu'une étendue axiale comprise plus généralement entre 15 centimètres et 30 centimètres sont envisageables dans certains modes de réalisation préférés de l'invention.

De plus, la section intermédiaire 36 de la nacelle comporte une rangée annulaire de pièces de liaison 82 (figure 6 et figures 9-12) espacées les unes des autres et reliant rigidement l'extrémité arrière externe 52 du capotage d'entrée d'air 34 aux extrémités avant 65 des capots 60 de manière à transmettre des efforts longitudinaux entre le capotage d'entrée d'air 34 et les capots 60. Dans certains modes de réalisation, les pièces de liaison 82 contribuent en outre à la transmission d'efforts radiaux et/ou de moments entre le capotage d'entrée d'air 34 et les capots 60.

Les pièces de liaison 82 sont avantageusement fixées au moyen d'organes de fixation traversants démontables 83, d'une part, à l'extrémité arrière externe 52 du capotage d'entrée d'air 34, et, d'autre part, aux extrémités avant 65 des capots 60 (figure 6). Les pièces de liaison 82 présentent à cet effet chacune des extrémités opposées qui sont respectivement rapportées sur la surface interne de l'extrémité arrière externe 52 du capotage d'entrée d'air 34 et sur la surface interne des extrémités avant 65 des capots 60.

En outre, la section intermédiaire 36 de la nacelle comporte un capotage intermédiaire 84 (figures 6 et 7) s'étendant entre le capotage d'entrée d'air 34 et les capots 60, autour de la rangée annulaire de pièces de liaison 82, de manière à obturer l'espace d'accès 80 et former une continuité aérodynamique avec le capotage d'entrée d'air 34 et les capots 60.

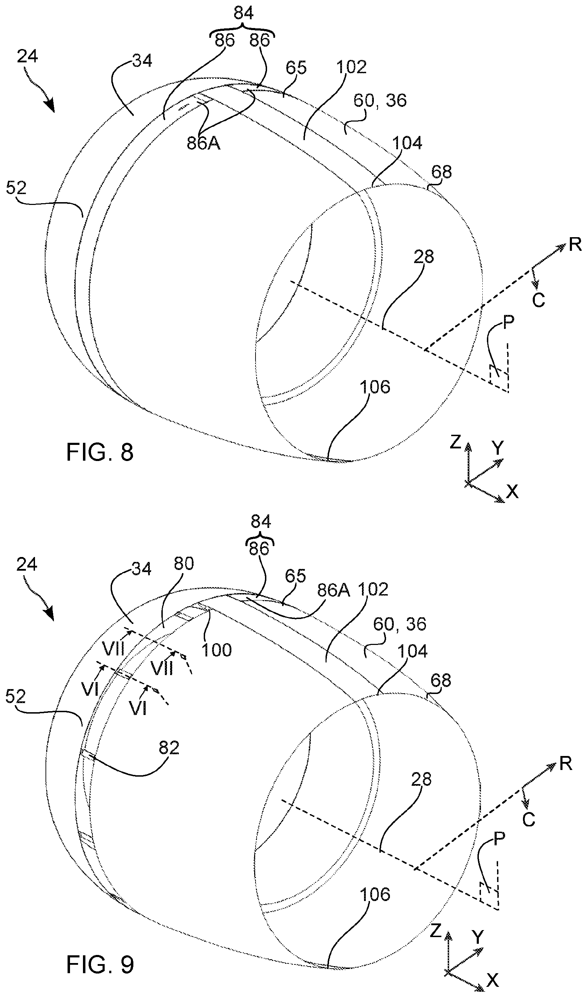

Le capotage intermédiaire 84 est formé d'une bande ou plusieurs bandes, par exemple deux bandes 86 (figure 8) agencées de part et d'autre d'un plan vertical médian P de la nacelle 24.

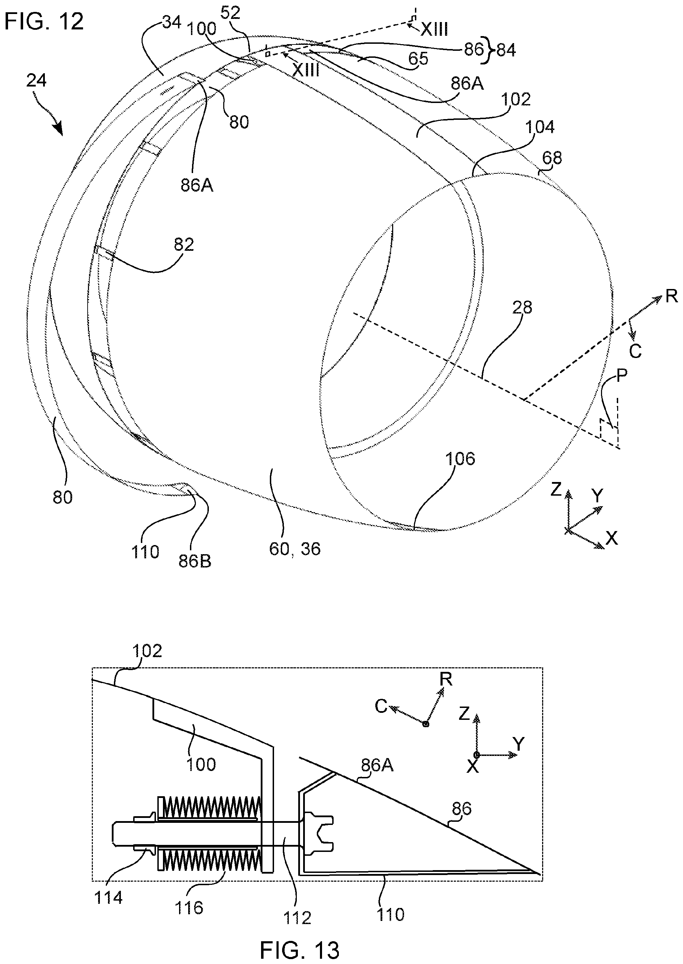

Le maintien en position de la bande ou de chaque bande 86 est assuré par un serrage tangentiel d'extrémités circonférentielles 86A, 86B de la bande (figure 12), ou de chaque bande, comme cela apparaîtra plus clairement dans ce qui suit.

En référence aux figures 6 et 7, le capotage d'entrée d'air 34 comporte un premier rebord 90 décalé radialement vers l'intérieur sur lequel repose une extrémité avant 92 du capotage intermédiaire 84. Le premier rebord 90 est défini au-delà de l'extrémité arrière externe 52 du capotage d'entrée d'air 34 en direction de l'arrière.

De manière analogue, les capots 60 comportent des deuxièmes rebords 94 respectifs décalés radialement vers l'intérieur sur lesquels repose une extrémité arrière 96 du capotage intermédiaire 84. Les deuxièmes rebords 94 sont définis au-delà des extrémités avant 65 des capots 60 en direction de l'avant.

Ainsi, la continuité aérodynamique peut être assurée de manière optimale entre le capotage d'entrée d'air 34 et le capotage intermédiaire 84 d'une part, et entre le capotage intermédiaire 84 et les capots 60 d'autre part.

Le serrage tangentiel des bandes 86 s'effectue sur des structures de serrage 100 (figures 12 et 13) qui sont par exemple portées par le capotage d'entrée d'air 34.

Dans l'exemple illustré, il y a deux telles structures de serrage 100 (dont l'une est visible sur les figures) agencées dans une partie supérieure de la nacelle 24, symétriquement de part et d'autre du plan vertical médian P, et deux autres structures de serrage analogues agencées dans une partie inférieure de la nacelle 24, également symétriquement de part et d'autre du plan vertical médian P.

Les deux structures de serrage 100 agencées dans la partie supérieure de la nacelle 24 sont par exemple recouvertes par une bande de carénage longitudinale supérieure 102, s'étendant vers l'arrière depuis l'extrémité arrière externe 52 du capotage annulaire et présentant une extrémité arrière de niveau avec des extrémités arrière 104 respectives des capots 60. De manière analogue, les deux structures de serrage agencées dans la partie inférieure de la nacelle 24 sont par exemple recouvertes par une bande de carénage longitudinale inférieure 106, s'étendant vers l'arrière depuis l'extrémité arrière externe 52 du capotage annulaire et présentant une extrémité arrière de niveau avec les extrémités arrière 104 des capots 60. Les bandes de carénage longitudinales sont par exemple fixées sur les structures de serrage 100.

Chaque bande 86 du capotage intermédiaire 84 comporte, à chacune de ses extrémités circonférentielles 86A, 86B, une cage 110 rapportée sur la surface interne de la bande 86 et dans laquelle est emprisonné au moins un organe de fixation démontable 112 tel qu'un boulon.

Le serrage tangentiel de chaque bande 86 s'effectue en introduisant chacun des organes de fixation démontables 112 liés aux extrémités circonférentielles de la bande dans des orifices prévus à cet effet dans les structures de serrage 100 correspondantes en position haute et basse, puis en vissant un écrou 114 (ou tout autre moyen analogue) sur chacun des organes de fixation démontables 112, avec interposition d'un moyen de sollicitation élastique 116, tel qu'un ressort ou des rondelles Belleville, entre l'écrou 114 et la structure de serrage 100 correspondante, de sorte que le moyen de sollicitation élastique 116 sollicite élastiquement l'extrémité correspondante de la bande en direction de la structure de serrage 100 considérée.

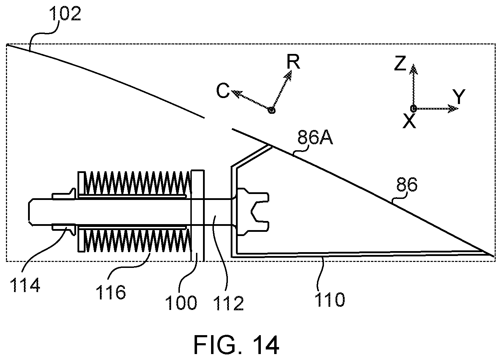

La figure 14 illustre une variante de réalisation dans laquelle les structures de serrage 100 sont portées par le carter de soufflante 32.

En variante, le nombre de bande(s) constituant le capotage intermédiaire 84 et le nombre de structure(s) de serrage peuvent être différents de ce qui est décrit ci-dessus.

Par exemple, les deux structures de serrage 100 en position haute peuvent être regroupées pour ne former qu'une structure unitaire. Il en est de même en ce qui concerne les deux structures de serrage 100 en position basse.

Par ailleurs, le capotage intermédiaire 84 peut être constitué d'une unique bande s'étendant tout autour de l'axe 28 à l'exception de la région correspondant le cas échéant à la bande de carénage longitudinale supérieure 102.

Dans un tel cas, le serrage tangentiel de la bande formant le capotage intermédiaire 84 peut être opéré directement entre les deux extrémités opposées de la bande, sans faire intervenir de structure de serrage fixe.

En variante encore, il peut être prévu une combinaison d'une ou plusieurs structure(s) de serrage portée(s) par le capotage d'entrée d'air 34 et d'une ou plusieurs autre(s) structure(s) de serrage portée(s) par le carter de soufflante 32.

Dans tous les cas, lorsqu'il est nécessaire d'accéder à la bride annulaire 33 du carter de soufflante 32, il suffit de relâcher le serrage tangentiel des extrémités de la ou les bande(s) 86 constituant le capotage intermédiaire 84 et de déposer la ou les bande(s) 86, ce qui s'avère considérablement plus rapide et simple que le démontage de rangées annulaires d'organes de fixation des capots 60 comme cela était nécessaire avec les nacelles de type connu.

Dans l'exemple illustré, cela ne requiert que le démontage des quelques organes de fixation démontables 112 qui assurent le serrage tangentiel des extrémités des bandes 86.

Dès que le capotage intermédiaire 84 est retiré, l'espace d'accès 80 devient visible et permet à un opérateur d'accéder au volume interne de la nacelle et en particulier à la bride annulaire 33 du carter de soufflante 32, par exemple pour intervenir sur les organes de fixation traversants démontables 53 qui relient l'extrémité arrière interne 50 du capotage d'entrée d'air 34 à la bride annulaire 33 du carter de soufflante 32.

Lorsqu'il est nécessaire de déposer le capotage d'entrée d'air 34, la procédure requiert en outre de démonter des pièces de liaison 82, ou au moins de les dissocier de l'extrémité arrière externe 52 du capotage d'entrée d'air 34. Le nombre de ces pièces de liaison, qui ne dépend que du niveau des efforts de liaison à transmettre au travers de ces pièces, peut être relativement modéré, de sorte que la dissociation ou le démontage de ces pièces implique un nombre d'opérations de retrait d'éléments de fixation considérablement inférieur à ce que requiert la dépose des capots de la section intermédiaire, nécessaire avec les nacelles de type connu.

Le capotage d'entrée d'air 34 peut ainsi être démonté, ou à l'inverse, monté, sur les autres parties correspondantes de la nacelle, sans avoir à déposer au préalable les capots 60.

L'invention tire parti du fait que la fixation de la ou les bande(s) 86 constituant le capotage 84 n'est pas critique pour la sécurité d'un avion en vol, du fait de l'étendue limitée du capotage intermédiaire 84, et donc aussi de la masse limitée de ce dernier, ce qui rend acceptable un serrage tangentiel tel que le propose l'invention. À cet effet, le capotage intermédiaire 84 présente de préférence une étendue axiale inférieure à 30 centimètres.

## Revendications

1. Nacelle (24) pour ensemble propulsif d'aéronef, comprenant, de l'avant vers l'arrière :
- un capotage d'entrée d'air (34) présentant une extrémité arrière interne (50) destinée à être rigidement fixée de manière démontable à un carter de soufflante (32) de turboréacteur, et une extrémité arrière externe (52) ;
- une section intermédiaire (36) comportant des capots (60) de type fixes et démontables, répartis autour d'un axe (28) de la nacelle ; et
- une section arrière (38) ;
les capots (60) présentant des extrémités avant (65) agencées chacune axialement en regard et à distance de l'extrémité arrière externe (52) du capotage d'entrée d'air (34) de manière à définir un espace d'accès (80) entre les extrémités avant (65) des capots et l'extrémité arrière externe (52) du capotage d'entrée d'air ;
la section intermédiaire (36) comportant en outre :
- une rangée annulaire de pièces de liaison (82) espacées les unes des autres et reliant rigidement l'extrémité arrière externe (52) du capotage d'entrée d'air (34) aux extrémités avant (65) des capots (60) de manière à transmettre des efforts longitudinaux entre le capotage d'entrée d'air et les capots ; et
- un capotage intermédiaire (84) s'étendant entre le capotage d'entrée d'air (34) et les capots (60), autour de la rangée annulaire de pièces de liaison (82), de manière à obturer l'espace d'accès (80) et former une continuité aérodynamique avec le capotage d'entrée d'air et les capots, ledit capotage intermédiaire (84) étant formé d'au moins une bande (86) dont le maintien en position est assuré par un serrage tangentiel d'extrémités circonférentielles (86A, 86B) de l'au moins une bande (86).

2. Nacelle selon la revendication 1, dans laquelle le capotage d'entrée d'air (34) comporte un premier rebord (90) décalé radialement vers l'intérieur et sur lequel repose une extrémité avant (92) du capotage intermédiaire (84).

3. Nacelle selon la revendication 1 ou 2, dans laquelle les capots (60) comportent chacun un deuxième rebord (94) décalé radialement vers l'intérieur et sur lequel repose une extrémité arrière (96) du capotage intermédiaire (84).

4. Nacelle selon l'une quelconque des revendications 1 à 3, dans laquelle l'au moins une bande (86) comprend deux bandes (86) agencées de part et d'autre d'un plan vertical médian (P) de la nacelle.

5. Nacelle selon l'une quelconque des revendications 1 à 4, dans laquelle le serrage tangentiel de l'au moins une bande (86) est réalisé au moyen d'au moins un organe de fixation démontable (112) sollicité élastiquement.

6. Nacelle selon l'une quelconque des revendications 1 à 5, dans laquelle le capotage d'entrée d'air (34) comporte une structure de serrage (100) sur laquelle est réalisé le serrage tangentiel de l'au moins une bande (86).

7. Nacelle selon l'une quelconque des revendications 1 à 6, dans laquelle les pièces de liaison (82) sont reliées au moyen d'organes de fixation traversants démontables (83), d'une part, à l'extrémité arrière externe (52) du capotage d'entrée d'air (34), et, d'autre part, aux extrémités avant (65) des capots (60).

8. Nacelle selon l'une quelconque des revendications 1 à 7, dans laquelle la section arrière (38) comporte un inverseur de poussée comprenant une grille déflectrice (72) déplaçable entre une position avancée de poussée directe et une position reculée d'inversion de poussée, et dans laquelle les capots (60) recouvrent au moins une portion avant de la grille déflectrice (72) dans la position avancée de poussée directe.

9. Ensemble propulsif (8) pour aéronef, comprenant :
- un turboréacteur (10) comprenant une soufflante (12) et un carter de soufflante (32) entourant la soufflante ; et
- une nacelle (24) selon l'une quelconque des revendications 1 à 8, entourant le turboréacteur (10), et dont l'extrémité arrière interne (50) du capotage d'entrée d'air (34) est rigidement fixée de manière démontable au carter de soufflante (32) du turboréacteur.

10. Ensemble propulsif selon la revendication 9, dans lequel le carter de soufflante (32) comporte une structure de serrage (100) sur laquelle est réalisé le serrage tangentiel de l'au moins une bande (86).

## Patentansprüche

1. Gondel (24) für eine Flugzeugantriebsanlage, umfassend von vorne nach hinten:
- eine Lufteinlassabdeckung (34), die ein inneres hinteres Ende (50), das dazu bestimmt ist, starr und demontierbar an einem Gebläsegehäuse (32) eines Turbotriebwerks befestigt zu sein, und ein äußeres hinteres Ende (52) besitzt;
- einen Zwischenabschnitt (36), der feste und demontierbare Abdeckungen (60) aufweist, die um eine Achse (28) der Gondel verteilt sind; und
- einen hinteren Abschnitt (38);
wobei die Abdeckungen (60) vordere Enden (65) besitzen, die jeweils axial gegenüber und in einem Abstand von dem äußeren hinteren Ende (52) der Lufteinlassabdeckung (34) angeordnet sind, um einen Zugangsraum (80) zwischen den vorderen Enden (65) der Abdeckungen und dem äußeren hinteren Ende (52) der Lufteinlassabdeckung zu definieren;
wobei der Zwischenabschnitt (36) ferner Folgendes aufweist:
- eine ringförmige Reihe von Verbindungsteilen (82), die voneinander beabstandet sind und das äußere hintere Ende (52) der Lufteinlassabdeckung (34) starr mit den vorderen Enden (65) der Abdeckungen (60) verbinden, so dass Längskräfte zwischen der Lufteinlassabdeckung und den Abdeckungen übertragen werden; und
- eine Zwischenabdeckung (84), die sich zwischen der Lufteinlassabdeckung (34) und den Abdeckungen (60) um die ringförmige Reihe von Verbindungsteilen (82) herum erstreckt, um den Zugangsraum (80) zu verschließen und eine aerodynamische Kontinuität mit der Lufteinlassabdeckung und den Abdeckungen zu bilden, wobei die Zwischenabdeckung (84) aus mindestens einem Streifen (86) gebildet ist, dessen Positionshaltung durch tangentiales Einklemmen der umlaufenden Enden (86A, 86B) des mindestens einen Bandes (86) gewährleistet wird.

2. Gondel nach Anspruch 1, wobei die Lufteinlassabdeckung (34) eine erste radial nach innen versetzte Kante (90) aufweist, auf der ein vorderes Ende (92) der Zwischenabdeckung (84) aufliegt.

3. Gondel nach Anspruch 1 oder 2, wobei die Abdeckungen (60) jeweils eine zweite radial nach innen versetzte Kante (94) aufweisen, auf der ein hinteres Ende (96) der Zwischenabdeckung (84) aufliegt.

4. Gondel nach einem der Ansprüche 1 bis 3, wobei der mindestens eine Streifen (86) zwei Streifen (86) umfasst, die auf beiden Seiten einer vertikalen Mittelebene (P) der Gondel angeordnet sind.

5. Gondel nach einem der Ansprüche 1 bis 4, wobei das tangentiale Einklemmen des mindestens einen Streifens (86) mittels mindestens eines demontierbaren, elastisch belasteten Befestigungselements (112) durchgeführt wird.

6. Gondel nach einem der Ansprüche 1 bis 5, wobei die Lufteinlassabdeckung (34) eine Klemmstruktur (100) aufweist, an der das tangentiale Einklemmen des mindestens einen Streifens (86) durchgeführt wird.

7. Gondel nach einem der Ansprüche 1 bis 6, wobei die Verbindungsteile (82) mittels demontierbarer, durchgehender Befestigungselemente (83) einerseits mit dem äußeren hinteren Ende (52) der Lufteinlassabdeckung (34) und andererseits mit den vorderen Enden (65) der Abdeckungen (60) verbunden sind.

8. Gondel nach einem der Ansprüche 1 bis 7, wobei der hintere Abschnitt (38) einen Schubumkehrer aufweist, der ein Leitgitter (72) umfasst, das zwischen einer vorgeschobenen Position des direkten Schubs und einer zurückgeschobenen Position der Schubumkehr beweglich ist, und wobei die Abdeckungen (60) mindestens einen vorderen Abschnitt des Leitgitters (72) in der vorgeschobenen Position des direkten Schubs abdecken.

9. Flugzeugantriebsanlage (8), umfassend:
- ein Turbotriebwerk (10), das ein Gebläse (12) und ein Gebläsegehäuse (32) umfasst, das das Gebläse umgibt; und
- eine Gondel (24) nach einem der Ansprüche 1 bis 8, das das Turbotriebwerk (10) umgibt und deren inneres hinteres Ende (50) der Lufteinlassabdeckung (34) starr und demontierbar am Gebläsegehäuse (32) des Turbotriebwerks befestigt ist.

10. Antriebsanlage nach Anspruch 9, wobei das Gebläsegehäuse (32) eine Klemmstruktur (100) aufweist, an der das tangentiale Einklemmen des mindestens einen Streifens (86) durchgeführt wird.

## Claims

1. Nacelle (24) for an aircraft propulsion unit, comprising, from front to rear:
- an air intake cowl (34) having an inner rear end (50) configured to be rigidly removably attached to a fan casing (32) of a turbine engine, and an outer rear end (52);
- an intermediate section (36) including hoods (60) of the fixed and removable type, distributed about an axis (28) of the nacelle; and
- a rear section (38);
the hoods (60) having front ends (65) each arranged axially facing and at a distance from the outer rear end (52) of the air intake cowl (34) so as to define an access space (80) between the front ends (65) of the hoods and the outer rear end (52) of the air intake cowl;
the intermediate section (36) further including:
- an annular row of mutually spaced connecting parts (82) which rigidly connect the outer rear end (52) of the air intake cowl (34) to the front ends (65) of the hoods (60) so as to transmit longitudinal forces between the air intake cowl and the hoods; and
- an intermediate cowl (84) extending between the air intake cowl (34) and the hoods (60), around the annular row of connecting parts (82), so as to close the access spaces (80) and create aerodynamic continuity with the air intake cowl and the hoods, said intermediate cowl (84) being formed from at least one strip (86) which is held in place by tangential clamping of the circumferential ends (86A, 86B) of the at least one strip (86).

2. Nacelle according to claim 1, wherein the air intake cowl (34) includes a first edge (90) radially inwardly offset and whereon a front end (92) of the intermediate cowl (84) rests.

3. Nacelle according to claim 1 or 2, wherein, the hoods (60) each include a second edge (94) radially inwardly offset and whereon a rear end (96) of the intermediate cowl (84) rests.

4. Nacelle according to any one of claims 1 to 3, wherein the at least one strip (86) comprises two strips (86) arranged on either side of a median vertical plane (P) of the nacelle.

5. Nacelle according to any one of claims 1 to 4, wherein tangential clamping of the at least one strip (86) is performed by means of at least one elastically biased removable attachment member (112).

6. Nacelle according to any one of claims 1 to 5, wherein the air intake cowl (34) includes a clamping structure (100) whereon tangential clamping of the at least one strip (86) is performed.

7. Nacelle according to any one of claims 1 to 6, wherein the connecting parts (82) are connected by means of removable attachment through-members (83), on the one hand, to the outer rear end (52) of the air intake cowl (34), and, on the other hand, to the front ends (65) of the hoods (60).

8. Nacelle according to any one of claims 1 to 7, wherein the rear section (38) includes a thrust reverser comprising a deflector grille (72) movable between a forward direct thrust position and a retracted thrust reversal position, and wherein the hoods (60) cover at least one front portion of the deflector grille (72) in the forward direct thrust position.

9. Propulsion unit (8) for aircraft, comprising:
- a turbine engine (10) comprising a fan (12) and a fan casing (32) surrounding the fan; and
- a nacelle (24) according to any one of claims 1 to 8, surrounding the turbine engine (10), and of which the inner rear end (50) of the air intake cowl (34) is rigidly removably attached to the fan casing (32) of the turbine engine.

10. Propulsion unit according to claim 9, wherein the fan casing (32) includes a clamping structure (100) whereon tangential clamping of the at least one strip (86) is performed.
